# EUROPEAN PATENT SPECIFICATION

(11) **EP 2 680 661 B1**
(45) Date of publication and mention of the grant of the patent: **20.07.2022**
(21) Application number: 13167601.7
(22) Date of filing: 14.05.2013
(51) Int. Cl.: H04W 48/18, H04W 88/06

(54) **Mode Switching Method and Device**
Modusumschaltverfahren und Vorrichtung
Procédé et dispositif de commutation de mode

(30) Priority: 17.05.2012 CN 201210153983
(43) Date of publication of application: 01.01.2014
(73) Proprietor: Honor Device Co., Ltd., Shenzhen, Guangdong 518040 (CN)
(72) Inventor: Zhang, Xiaopeng, 518129 Shenzhen (CN)
(74) Representative: Goddar, Heinz J.

(56) References cited:
- EP-A1- 2 182 328
- EP-A1- 2 391 177
- US-A- 6 104 929
- US-B2- 7 787 444
- 3GPP: "3rd Generation Partnership Project; Technical Specification Group Services and System Aspects; General Packet Radio Service (GPRS); Service description; Stage 2 (Release 10)", 3GPP DRAFT; 23060-A70_CRS_IMPLEMENTED, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, 14 March 2012 (2012-03-14), XP050625415, [retrieved on 2012-03-14]
- "3rd Generation Partnership Project; Technical Specification Group Services and System Aspects; General Packet Radio Service (GPRS); Service description; Stage 1 ( )", 3GPP STANDARD ; TECHNICAL SPECIFICATION ; 3GPP TS 22.060, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG1, no. V10.0.0, 8 April 2011 (2011-04-08), pages 1-26, XP051292051, [retrieved on 2011-04-08]

## Description

### FIELD OF THE INVENTION

The present invention relates to the field of terminal technologies, and in particular, to a mode switching method and device.

### BACKGROUND OF THE INVENTION

When a user does not want to receive calls or short messages, the user switches the mode of a mobile phone to an offline mode, so as to be free from answering calls or receiving short messages. In this case, the mobile phone is incapable of performing services in a CS (Circuit Switch, circuit switch) domain and a PS (Packet Switch) domain. Voice and short message services are managed in the CS domain, and data services, such as Internet access and stream media services, are managed in the PS domain.

After research, it is found that, when the mobile phone is switched to an offline mode, the mobile phone is in a power-off state relative to the network, so in addition to that calls and short messages in a CS domain service cannot be received, network data services in a PS domain service cannot be used as well.

US 6104929 A discloses that the address of a latest Serving GPRS Support Node (SGSN) is provided to a Gateway GPRS Support Node (GGSN) by a special Update SGSN Address Request message, which is sent from the latest SGSN to the GGSN. In response to the Update SGSN Address Request message, the GGSN sends an Update SGSN Address Response message which advises whether the updating of the address for the latest SGSN at the GGSN has been successful. When the updating of the address for the latest SGSN at the GGSN has been successful, the latest SGSN responds to a mobile station (step 4-9) with a Routing Area Update Accept message. The "PLMN-Supported MT Capabilities" in the Routing Area Update Accept message used for indicating which GPRS MS Class mode of operation is supported. The MS perform some operations according to the PLMN-Supported MT Capabilities.

EP 2182328 A1 discloses a method of transferring user data from a communication module (M2M terminal) to a data processing centre (M2M server) over a telecommunications network. The communication module sends a signalling message to a Short Message Service Centre (SMSC). The signalling message contains the user data that is subsequently transferred, by the SMSC, to the data processing centre. The SMSC, after having sent the user data to the data processing centre, sends a delivery report to the communication module. Subsequently, the communication module starts a detach procedure to inform the network it no longer wants to access the CS services or PS services.

EP 2391177 A1 discloses handling detachment procedures for only non-emergency services upon expiration of a Closed Subscriber Group (CSG) subscription while resources for emergency services also exist.

US 7,787,444 B2 discloses a method and mobile terminal for use in a wireless communication system in order for the mobile terminal to be able to transition from a dual mode, in which a packet switched connection and circuit switched connection are used together, to a single mode in which packets are transferred. The mobile terminal is for receiving minimum system information necessary to perform the transition in an uninterrupted manner, instead of an interrupted manner. This system information is broadcast to the mobile terminal on a regular basis, and is also sent to the mobile terminal partly or entirely by point-to-point transfer if a piece of the minimum system information is missing due to inadequate broadcast reception or some other reason. This system information is then employed by the mobile terminal to transition from the dual mode to the single mode in the uninterrupted manner.

### SUMMARY OF THE INVENTION

Embodiments of the present invention provide a mode switching method and device, which implement that network data services may be used when a terminal is incapable of receiving calls and short messages, thereby improving service experience of users.

The invention is defined by all features present in and required by the independent claims 1 and 4, which represent embodiments of the invention. Further features of exemplary embodiments are defined in the dependent claims. The subject-matter of the following description and figures, even if described or named as "embodiment(s)", "invention(s)", "aspect(s)", "example(s)", or "disclosure(s)" etc., does not or does not fully and thus may only partly correspond to the invention as defined in the claims (e.g. due to one or more features present in and required by the independent claims, which are missing in the "embodiment(s)", "invention(s)", "aspect(s)", "example(s)", or "disclosure(s)" etc., for example due to the use of expressions like "or", "skip", "skipped", "alternative", "alternatively", "may", "preferably", "optional(ly)", "can", "could", "as an/for example" etc. replacing one or more features present in and required by the independent claims and/or rendering one or more features present in and required by the independent claims as optional), and is therefore not covered or not fully covered by the claimed invention, but is useful to highlight specific aspects of the claims.

In the mode switching method and device provided in the embodiments of the present invention, when a first switching instruction for switching a working mode of a terminal to a target mode is received, the working mode of the terminal is switched to the target mode, where the target mode indicates that a circuit switch CS domain service is in a disconnected state, and a packet switch PS domain service is in a connected state. The embodiments of the present invention solve the problem in the prior art that when a terminal is switched to an offline mode, in addition to that calls and short messages in a CS domain service cannot be received, network data services in a PS domain service cannot be used as well because the terminal is in a power-off state relative to a network, and implement that the terminal is capable of using network data services when being incapable of receiving calls or short messages, thereby improving service experience of users.

### BRIEF DESCRIPTION OF THE DRAWINGS

FIG. 1 is a flow chart of a mode switching method according to Example 1 of the present application;
FIG. 2 is a flow chart of another mode switching method according to Example 1 of the present application;
FIG. 3 is a flow chart of still another mode switching method according to Example 1 of the present application;
FIG. 4 is a flow chart of still another mode switching method according to Example 1 of the present application;
FIG. 5 is a flow chart of still another mode switching method according to Example 1 of the present application;
FIG. 6 is a structural diagram of a terminal according to Example 2 of the present application;
FIG. 7 is a structural diagram of a processing unit in a terminal according to Example 2 of the present application;
FIG. 8 is a structural diagram of another processing unit in a terminal according to Example 2 of the present application; and
FIG. 9 is a structural diagram of still another processing unit in a terminal according to Example 2 of the present application.

### DETAILED DESCRIPTION OF THE EMBODIMENTS

A mode switching method and device according to the embodiment of the present invention are described in detail below with reference to the accompanying drawings.

### Example 1

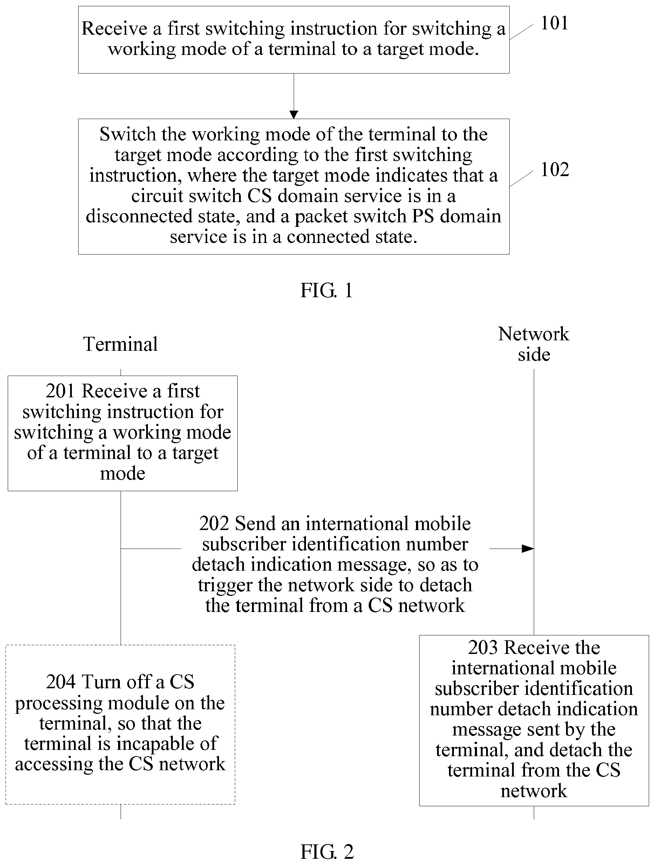

As shown in FIG. 1, a mode switching method according to an example of the present application specifically includes the following steps:

101: Receive a first switching instruction for switching a working mode of a terminal to a target mode.

102: Switch the working mode of the terminal to the target mode according to the first switching instruction, where the target mode indicates that a circuit switch CS domain service is in a disconnected state, and a packet switch PS domain service is in a connected state.

In the mode switching method according to an example of the present application, when a first switching instruction for switching a working mode of a terminal to a target mode is received, the working mode of the terminal is switched to the target mode, where the target mode indicates that a circuit switch CS domain service is in a disconnected state, and a packet switch PS domain service is in a connected state. The example of the present application solves the problem in the prior art that when a terminal is switched to an offline mode, the terminal is in power-off state relative to a network, so in addition to that calls and short messages in a CS domain service cannot be received, network data services in a PS domain service cannot be used as well, and implements that the terminal is capable of using network data services when being incapable of receiving calls or short messages, thereby improving service experience of users.

An execution subject of the above method is a mobility management module in the terminal. The mobility management module is existing entity hardware on the terminal. The first switching instruction in the above method is first received by an application layer of the terminal, and is sent by the application layer of the terminal to the mobility management module of the terminal, so that the mobility management module of the terminal receives the first switching instruction. Then, through a specific operation of the mobility management module of the terminal, the working mode of the terminal is switched to the target mode.

FIG. 2 shows a mode switching method according to an embodiment of the present invention. In a specific application, for example, before the working mode of the terminal is switched to the target mode, if the working mode of the terminal is a first mode, where the first mode indicates that the CS domain service is in a connected state, and the PS domain service is in a connected state, the mode switching method specifically includes the following steps:
201: Receive a first switching instruction for switching a working mode of a terminal to a target mode.

Exemplarily, an option or an icon corresponding to the target mode may be added in a keyboard, a touchscreen or an interface menu of the terminal, where the option or the icon is used to generate a first switching instruction input by a user when the user clicks the option or icon corresponding to the target mode, so that the application layer of the terminal receives the first switching instruction. The application layer of the terminal sends the first switching instruction to the mobility management module of the terminal, so that the mobility management module of the terminal receives the first switching instruction, so as to set the working mode of the terminal to the target mode.

Optionally, an option may further be added in a setting menu of the terminal, where the option is used to generate a first switching instruction input by a user when the user selects the option, so that the application layer of the terminal receives the first switching instruction. The application layer of the terminal sends the first switching instruction to the mobility management module of the terminal, so that the mobility management module of the terminal receives the first switching instruction and detaches the terminal from a CS network. In other words, a CS domain service of the terminal is in a disconnected state, and a PS domain service is in a connected state, that is, the working mode of the terminal is set to the target mode.

An execution subject of this step is the mobility management module, which is existing entity hardware on the terminal.

202: The terminal sends an international mobile subscriber identification number detach indication message to a network side, so as to trigger the network side to detach the terminal from a CS network.

Specifically, the mobility management module of the terminal sends an international mobile subscriber identification number detach indication (International Mobile Subscriber Identification Number Detach Indication, IMSI Detach Indication) message to the network side, so as to trigger the network side to detach the terminal from the CS network.

203: The network side receives the international mobile subscriber identification number detach indication message sent by the terminal, and detaches the terminal from the CS network.

After receiving the international mobile subscriber identification number detach indication message sent by the terminal, the network side may detach the terminal from the CS network by using an existing technology.

In the existing technology, when the terminal is switched to an offline mode, while sending an IMSI detach indication message to the network side, the terminal also sends a GPRS (General Packet Radio Service, general packet radio service) detach indication message to the network side, or sends an IMSI and GPRS joint detach indication message to the network side, so that both the CS domain service and the PS domain service of the terminal are in disconnected state, that is, the terminal is incapable of performing the CS domain and PS domain services. However, in the embodiment of the present invention, only an IMSI detach indication message is sent to the network side, so that the CS domain service of the terminal is in disconnected state, while the PS domain service is in connected state, that is, the terminal is incapable of performing the CS domain service, but is still capable of performing the PS domain service.

Optionally, the above steps 202 to 203 may also be replaced by the following step 204:
204: The terminal turns off a CS processing module on the terminal, so that the terminal is incapable of accessing a CS network.

The mobility management module of the terminal turns off the CS processing module on the terminal, and maintains a PS processing module in an on state.

For the network side, the terminal does not send an IMSI detach indication message to the network side, so the network side does not know that the terminal is incapable of performing the CS domain service. When a call is made to the terminal, the network side gets a response indicating that the call cannot be answered.

Through the above method, no matter the terminal sends an international mobile subscriber identification number detach indication message to the network side, or turns off the CS processing module on the terminal, the CS domain service on the terminal is in a disconnected state, and the PS domain service is in a connected state.

In this case, the terminal is incapable of performing the CS domain service such as calls and short messages, but is capable of performing the PS domain service such as web browsing. A user is free from answering calls or receiving short messages, but may still use data services, for example, the PS domain service such as Internet access and stream media.

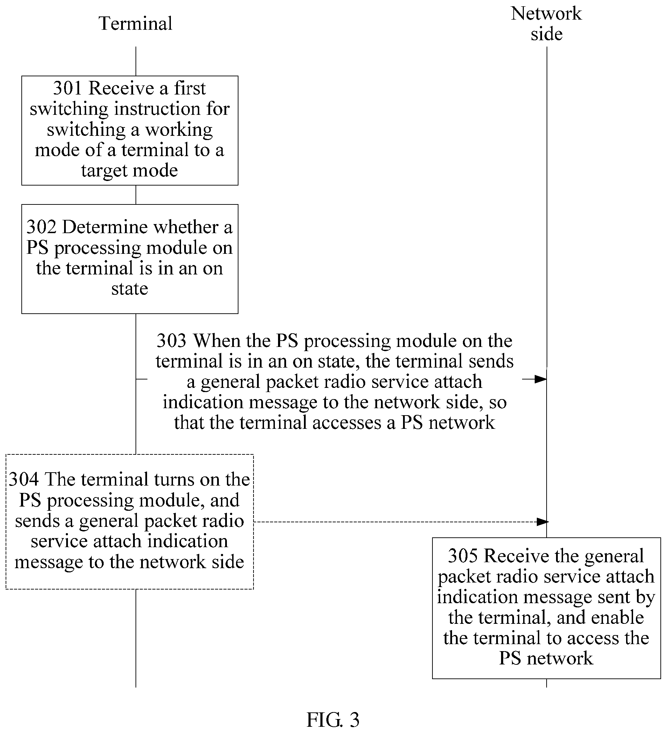

FIG. 3 shows a mode switching method according to an example of the present application. For example, before the working mode of the terminal is switched to the target mode, if the working mode of the terminal is a second mode (the second mode is the same as the offline mode in the prior art), where the second mode indicates that the CS domain service is in a disconnected state, and the PS domain service is in a disconnected state, the mode switching method specifically includes the following steps:
301: Receive a first switching instruction for switching a working mode of a terminal to a target mode.

Exemplarily, an option or an icon corresponding to the target mode may be added in a keyboard, a touchscreen or an interface menu of the terminal, where the option or the icon is used to generate a first switching instruction input by a user when the user clicks the option or icon corresponding to the target mode, so that the application layer of the terminal receives the first switching instruction. The application layer of the terminal sends the first switching instruction to the mobility management module of the terminal, so that the mobility management module of the terminal receives the first switching instruction, so as to set the working mode of the terminal to the target mode.

Optionally, when a terminal is in offline mode in the prior art, an option may further be added in a setting menu of the terminal, where the option is used to generate a first switching instruction input by a user when the user selects the option, so that the application layer of the terminal receives the first switching instruction. The application layer of the terminal sends the first switching instruction to the mobility management module of the terminal, so that the mobility management module of the terminal receives the first switching instruction and enables the terminal to access a PS network. In other words, a CS domain service of the terminal is in a disconnected state, and a PS domain service is in a connected state, that is, the working mode of the terminal is switched to the target mode.

An execution subject of this step is the mobility management module, which is existing entity hardware on the terminal.

302: Determine whether a PS processing module on the terminal is in an on state.

Specifically, the mobility management module of the terminal determines whether the PS processing module on the terminal is in an on state.

303: When the PS processing module on the terminal is in an on state, the terminal sends a general packet radio service attach indication message to the network side, so that the terminal accesses a PS network.

Specifically, when the mobility management module of the terminal determines that the PS processing module on the terminal is in an on state, the mobility management module of the terminal sends a general packet radio service attach indication message to the network side, so that the terminal accesses the PS network.

304: When the PS processing module on the terminal is in an off state, the terminal turns on the PS processing module, and sends a general packet radio service attach indication message to the network side, so that the terminal accesses the PS network.

Specifically, when the mobility management module of the terminal determines that the PS processing module on the terminal is in an off state, the mobility management module of the terminal turns on the PS processing module, and sends a general packet radio service attach indication message to the network side, so that the terminal accesses the PS network.

305: The network side receives the general packet radio service attach indication message sent by the terminal, and enables the terminal to access the PS network.

After receiving the general packet radio service attach indication message sent by the terminal, the network side may enable the terminal to access the PS network by using an existing technology.

In the existing technology, when the terminal is switched to an offline mode, by means of the above method, the PS processing module on the terminal is in an on state, and a general packet radio service attach indication message is sent to the network device, so that the terminal accesses the PS network, that is, the terminal is capable of performing the PS domain service.

In this case, the terminal is capable of performing the PS domain service such as web browsing but is incapable of performing the CS domain service such as calls and short messages. A user is free from answering calls or receiving short messages, but may still use data services, for example, the PS domain service such as Internet access and stream media.

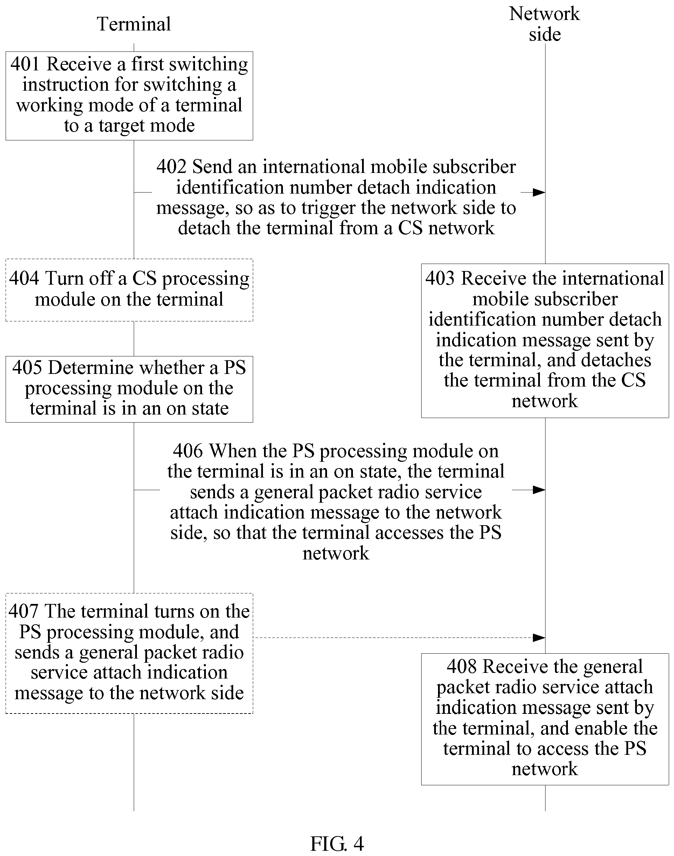

FIG. 4 shows a mode switching method according to an example of the present application. In a specific application, for example, before the working mode of the terminal is switched to the target mode, if the working mode of the terminal is a third mode, where the third mode indicates that the CS domain service is in a connected state, and the PS domain service is in a disconnected state, the mode switching method specifically includes the following steps:
401: Receive a first switching instruction for switching a working mode of a terminal to a target mode.

Exemplarily, an option or an icon corresponding to the target mode may be added in a keyboard, a touchscreen or an interface menu of the terminal, where the option or the icon is used to generate a first switching instruction input by a user when the user clicks the option or icon corresponding to the target mode, so that the application layer of the terminal receives the first switching instruction. The application layer of the terminal sends the first switching instruction to the mobility management module of the terminal, so that the mobility management module of the terminal receives the first switching instruction, so as to set the working mode of the terminal to the target mode.

An execution subject of this step is the mobility management module, which is existing entity hardware on the terminal.

402: The terminal sends an international mobile subscriber identification number detach indication message to a network side, so as to trigger the network side to detach the terminal from a CS network.

Specifically, the mobility management module of the terminal sends an international mobile subscriber identification number detach indication message to the network side, so as to trigger the network side to detach the terminal from a CS network.

403: The network side receives the international mobile subscriber identification number detach indication message sent by the terminal, and detaches the terminal from the CS network.

After receiving the international mobile subscriber identification number detach indication message sent by the terminal, the network side may detach the terminal from the CS network using an existing technology.

Optionally, the above step 402 to 403 may be replaced by the following step 404:
404: The terminal turns off a CS processing module on the terminal, so that the terminal is incapable of accessing a CS network.

The mobility management module of the terminal turns off the CS processing module on the terminal, and maintains a PS processing module in an on state.

For the network side, the terminal does not send an IMSI detach indication message to the network side, so the network side does not know that the terminal is incapable of performing the CS domain service. When a call is made to the terminal, the network side gets a response indicating that the call cannot be answered.

405: Determine whether a PS processing module on the terminal is in an on state.

Specifically, the mobility management module of the terminal determines whether the PS processing module on the terminal is in an on state.

406: When the PS processing module on the terminal is in an on state, the terminal sends a general packet radio service attach indication message to the network side, so that the terminal accesses the PS network.

Specifically, when the mobility management module of the terminal determines that the PS processing module on the terminal is in an on state, the mobility management module of the terminal sends a general packet radio service attach indication message to the network side, so that the terminal accesses the PS network.

407: When the PS processing module on the terminal is in an off state, the terminal turns on the PS processing module, and sends a general packet radio service attach indication message to the network side, so that the terminal accesses the PS network.

Specifically, when the mobility management module of the terminal determines that the PS processing module on the terminal is in off state, the mobility management module of the terminal turns on the PS processing module, and sends a general packet radio service attach indication message to the network side, so that the terminal accesses the PS network.

408: The network side receives the general packet radio service attach indication message sent by the terminal, and enables the terminal to access the PS network.

After receiving the general packet radio service attach indication message sent by the terminal, the network side may enable the terminal to access the PS network by using an existing technology.

When the working mode of the terminal is a third mode, where the third mode indicates that the CS domain service is in a connected state, and the PS domain service is in a disconnected state, by means of the above method, the working mode of the terminal may be switched to the target mode.

In this case, the terminal is capable of performing the PS domain service such as web browsing but is incapable of performing the CS domain service such as calls and short messages. A user is free from answering calls or receiving short messages, but may still use data services, for example, the PS domain service, such as Internet access and stream media.

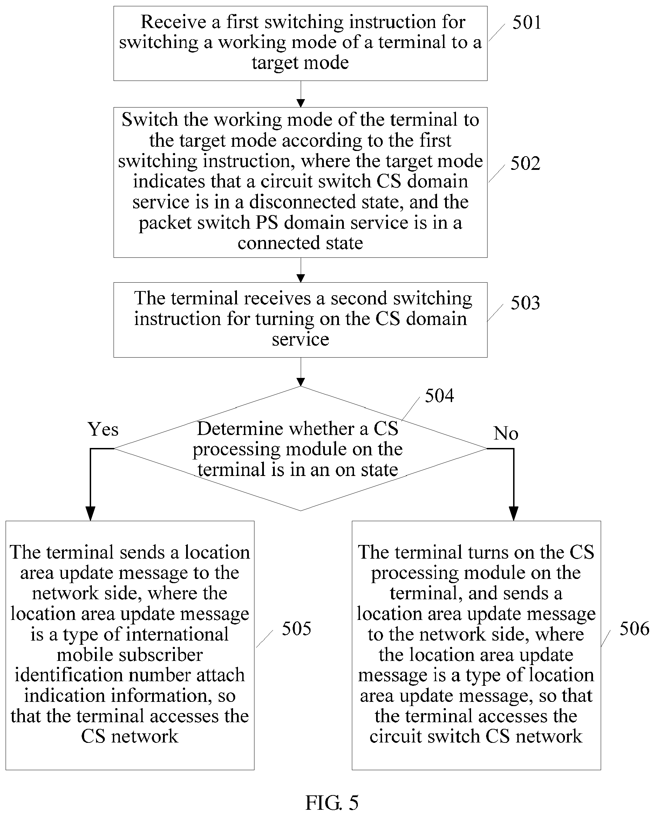

FIG. 5 shows still another mode switching method according to an example of the present application, which specifically includes the following steps in specific applications:
501: Receive a first switching instruction for switching a working mode of a terminal to a target mode.

Specific implementation of step 501 is the same as that of step 201, step 301 or step 401, and for execution, reference may be made to step 201, step 301 or step 401, which is not described here again.

An execution subject of this step is the mobility management module, which is existing entity hardware on the terminal.

502: Switch the working mode of the terminal to the target mode according to the first switching instruction, where the target mode indicates that a circuit switch CS domain service is in a disconnected state, and a packet switch PS domain service is in a connected state.

After the working mode of the terminal is switched to the target mode, the following steps may be performed:

503: The terminal receives a second switching instruction for turning on the CS domain service.

Exemplarily, an option or an icon corresponding to the first mode may be added in a keyboard, a touchscreen or an interface menu of the terminal, where the option or the icon is used to generate a second switching instruction input by a user when the user clicks the option or icon corresponding to the first mode, so that the application layer of the terminal receives the second switching instruction. The application layer of the terminal sends the second switching instruction to the mobility management module of the terminal, so that the mobility management module of the terminal receives the second switching instruction, so as to set the working mode of the terminal to the first mode. The terminal hence turns on the CS domain service.

Optionally, an option may further be added in a setting menu of the terminal, where the option is used to generate a second switching instruction input by a user when the user selects the option, so that the application layer of the terminal receives the second switching instruction. The application layer of the terminal sends the second switching instruction to the mobility management module of the terminal, so that the mobility management module of the terminal receives the second switching instruction and enables the terminal to access a CS network. In other words, the CS domain service of the terminal is in a connected state, and the PS domain service is maintained in a connected state, that is, the working mode of the terminal is set to the first mode.

An execution subject of this step is the mobility management module, which is existing entity hardware on the terminal.

504: Determine whether a CS processing module is in an on state.

Specifically, the mobility management module of the terminal determines whether the CS processing module on the terminal is in an on state.

505: When the CS processing module on the terminal is in an on state, the terminal sends a location area update message to the network side, where the location area update message is a type of international mobile subscriber identification number attach indication information, so that the terminal accesses the CS network.

The mobility management module of the terminal sends a location area update message to the network side, where the location area update message is a type of an international mobile subscriber identification number attach indication IMSI Attach Indication message, so that the terminal accesses the CS network.

After the location area is successfully updated, the terminal recovers the CS domain service, and may receive calls and short messages.

In the prior art, if the offline mode is turned off, while updating the location area, the terminal further needs to send a GPRS attach indication message to the network side, so that the terminal is capable of performing the PS domain service. Unlike the prior art, in the example of the present application, the PS domain service is maintained in a connected state, so only the CS domain service needs to be recovered.

When the network side receives the international mobile subscriber identification number attach indication message sent by the terminal, the network side may enable the terminal to access the CS network by using an existing technology.

506: When the CS processing module on the terminal is in an off state, the terminal turns on the CS processing module on the terminal, and sends a location area update message to the network side, where the location area update message is a type of a common location area update message, so that the terminal accesses the circuit switch CS network.

The mobility management module of the terminal sends a common location area update message to the network side, so that the terminal accesses the CS network. The terminal turns on the CS processing module on the terminal, and after the location area is successfully updated, the terminal recovers the CS domain service, thereby being capable of receiving calls and short messages.

When the network side receives the common location area update message sent by the terminal, the network side may enable the terminal to access the CS network by using an existing technology.

### Example 2

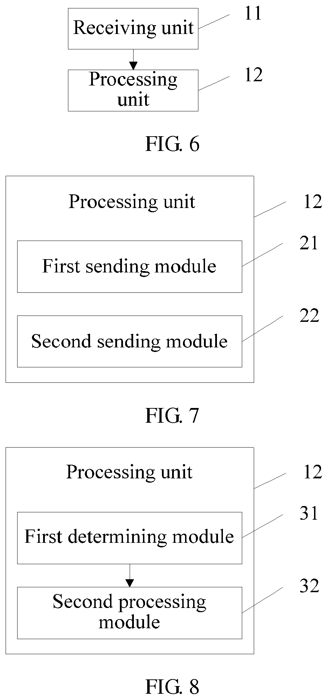

A terminal provided in an example of the present application is shown in FIG. 6, which includes a receiving unit 11 and a processing unit 12.

The receiving unit 11 is configured to receive a first switching instruction for switching a working mode of a terminal to a target mode.

The processing unit 12 is configured to switch the working mode of the terminal to the target mode according to the first switching instruction, where the target mode indicates that a circuit switch CS domain service is in a disconnected state, and a packet switch PS domain service is in a connected state.

In the terminal provided in the example of the present application, when the receiving unit receives a first switching instruction for switching a working mode of a terminal to a target mode, the working mode of the terminal is switched to the target mode, where the target mode indicates that a circuit switch CS domain service is in a disconnected state, and a packet switch PS domain service is in a connected state. The example of the present application solves the problem in the prior art that when a terminal is switched to an offline mode, the terminal is in power-off state relative to a network, so in addition to that calls and short messages in a CS domain service cannot be received, network data services in a PS domain service cannot be used as well, and implements that the terminal is capable of using network data services when being incapable of receiving calls or short messages, thereby improving service experience of users.

As shown in FIG. 7, in the terminal provided in an embodiment of the present invention, the processing unit includes:
a first sending module 21, configured to send an international mobile subscriber identification number detach indication message to a network side, so as to trigger the network side to detach the terminal from a CS network; or,
a first processing module 22, configured to turn off a CS processing module on the terminal, so that the terminal is incapable of accessing the CS network.

Optionally, as shown in FIG. 8, in the terminal provided in an example of the present application, the processing unit includes:
a first determining module 31, configured to determine whether a PS processing module on the terminal is in an on state; and
a first processing module 32, configured to: when the PS processing module on the terminal is in an on state, enable the terminal to send a general packet radio service attach indication message to a network side, so that the terminal accesses a PS network.

The first processing module is further configured to: when the PS processing module on the terminal is in an off state, enable the terminal to turn on the PS processing module and send a general packet radio service attach indication message to the network side, so that the terminal accesses the PS network.

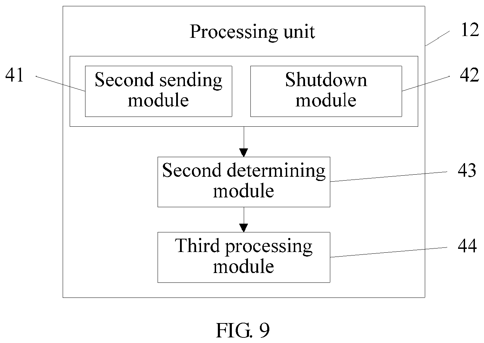

Optionally, as shown in FIG. 9, in the terminal provided in an embodiment of the present invention, the processing unit includes:
a second sending module or a shutdown module, or a combination thereof, where the second sending module 41 is configured to send an international mobile subscriber identification number detach indication message to a network side, so as to trigger the network side to detach the terminal from a CS network;
the shutdown module 42 is configured to turn off a CS processing module on the terminal, so that the terminal is incapable of accessing the CS network;
a second determining module 43, configured to determine whether a PS processing module on the terminal is in an on state; and
a third processing module 44, configured to: when the PS processing module on the terminal is in an on state, enable the terminal to send a general packet radio service attach indication message to the network side, so that the terminal accesses the PS network.

The third processing module is further configured to: when the PS processing module on the terminal is in an off state, enable the terminal to turn on the PS processing module and send a general packet radio service attach indication message to the network side, so that the terminal accesses the PS network.

Optionally, in the terminal provided in the embodiment of the present invention, the receiving unit is further configured to receive a second switching instruction for turning on the CS domain service.

The processing unit is further configured to determine whether the CS processing module on the terminal is in an on state; when the CS processing module on the terminal is in an on state, enable the terminal to send a location area update message to the network side, where the location area update message is a type of international mobile subscriber identification number attach indication information, so that the terminal accesses the CS network; and when the CS processing module on the terminal is in off state, enable the terminal to turn on the CS processing module on the terminal and send a location area update message to the network side, where the location area update message is a type of a common location area update message, so that the terminal accesses the circuit switch CS network.

For an operation process of the terminal, reference may be made to the implementation process of the mode switching method.

The above terminal may be a terminal product such as a mobile phone or a tablet computer.

## Claims

1. A mode switching method, comprising:
receiving (101), by a terminal, a first switching instruction input by a user, wherein the first switching instruction is used for switching a working mode of the terminal to a target mode, wherein the working mode indicates that a circuit switch, CS, domain service is in a connected state and a packet switch, PS, domain service is in a connected state; and
switching (102), by the terminal, the working mode of the terminal to the target mode according to the first switching instruction, wherein the target mode indicates that the CS domain service is in a disconnected state, and the PS domain service is in a connected state;
wherein
the switching, by the terminal, the working mode of the terminal to the target mode according to the first switching instruction comprises:
sending, by the terminal, an international mobile subscriber identification number detach indication message to a network side, so as to trigger the network side to detach the terminal from a CS network; or,
turning off, by the terminal, a CS processing module on the terminal, so that the terminal is incapable of accessing the CS network.

2. The method according to claim 1, after the switching the working mode of the terminal to the target mode, further comprising:
receiving, by the terminal, a second switching instruction input by a user, wherein the second switching instruction is used for turning on the CS domain service;
determining whether the CS processing module on the terminal is in an on state;
if the CS processing module on the terminal is in an on state, sending, by the terminal, a location area update message to the network side, wherein the location area update message is a type of international mobile subscriber identification number attach indication information, so that the terminal accesses the CS network; and/or,
if the CS processing module on the terminal is in an off state, turning on, by the terminal, the CS processing module on the terminal, and sending a location area update message to the network side, wherein the location area update message is a type of a common location area update message, so that the terminal accesses the circuit switch CS network.

3. The method according to claim 1, wherein the terminal comprises:
a setting menu, which contains an option,
the option is configured to receive a selection operation and generate the first switching instruction.

4. A terminal, comprising:
a receiving unit (11), configured to receive a first switching instruction input by a user, wherein the first switching instruction used for switching a working mode of a terminal to a target mode, wherein the working mode indicates that a circuit switch, CS, domain service is in a connected state and a packet switch, PS, domain service is in a connected state; and
a processing unit (12), configured to switch the working mode of the terminal to the target mode according to the first switching instruction, wherein the target mode indicates that a circuit switch CS domain service is in a disconnected state, and a packet switch PS domain service is in a connected state;
wherein the processing unit (12) comprises:
a first sending module (21), configured to send an international mobile subscriber identification number detach indication message to a network side, so as to trigger the network side to detach the terminal from a CS network; and/or,
a first processing module (22), configured to turn off a CS processing module on the terminal, so that the terminal is incapable of accessing the CS network.

5. The terminal according to claim 4, wherein,
the receiving unit (11) is configured to receive a second switching instruction input by a user, wherein the second switching instruction used for turning on the CS domain service;
the processing unit (12) is further configured to determine whether the CS processing module on the terminal is in an on state; when the CS processing module on the terminal is in an on state, enable the terminal to send a location area update message to the network side, wherein the location area update message is a type of international mobile subscriber identification number attach indication information, so that the terminal accesses the CS network; and when the CS processing module on the terminal is in an off state, enable the terminal to turn on the CS processing module on the terminal and send a location area update message to the network side, wherein the location area update message is a type of a common location area update message, so that the terminal accesses the circuit switch CS network.

## Patentansprüche

1. Modus-Umschaltverfahren, umfassend:
Empfangen (101), durch ein Endgerät, einer ersten Schaltanweisung, die von einem Benutzer eingegeben wird, wobei die erste Schaltanweisung zum Umschalten eines Arbeitsmodus des Endgerätes in einen Zielmodus verwendet wird, wobei der Arbeitsmodus indiziert, dass ein Leitungsvermittlungs-, CS-, Domäne-Dienst sich in einem verbundenen Zustand befindet und ein Paketvermittlungs-, PS-, Domäne-Dienst sich in einem verbundenen Zustand befindet; und
Umschalten (102), durch das Endgerät, des Arbeitsmodus des Endgerätes in den Zielmodus gemäß der ersten Schaltanweisung, wobei der Zielmodus indiziert, dass sich der CS-Domäne-Dienst in einem getrennten Zustand befindet und der PS-Domäne-Dienst sich in einem verbundenen Zustand befindet;
wobei
das Umschalten des Arbeitsmodus des Endgerätes in den Zielmodus durch das Endgerät gemäß der ersten Schaltanweisung umfasst:
Senden, durch das Endgerät, einer Nachricht, die das Trennen der internationalen Mobilfunkteilnehmer-Identifikationsnummer anzeigt, an eine Netzwerkseite, um die Netzwerkseite zu veranlassen, das Endgerät von einem CS-Netzwerk zu trennen; oder,
Ausschalten eines CS-Verarbeitungsmoduls auf dem Endgerät durch das Endgerät, so dass das Endgerät nicht in der Lage ist, auf das CS-Netzwerk zuzugreifen.

2. Verfahren nach Anspruch 1, das nach dem Umschalten des Arbeitsmodus des Endgerätes in den Zielmodus ferner umfasst:
Empfangen, durch das Endgerät, einer zweiten Schaltanweisung, die von einem Benutzer eingegeben wird, wobei die zweite Schaltanweisung zum Einschalten des CS-Domäne-Dienstes verwendet wird;
Bestimmen, ob sich das CS-Verarbeitungsmodul auf dem Endgerät in einem eingeschalteten Zustand befindet;
wenn sich das CS-Verarbeitungsmodul auf dem Endgerät in einem eingeschalteten Zustand befindet, Senden einer Aufenthaltsbereichs-Aktualisierungs-Nachricht durch das Endgerät an die Netzwerkseite, wobei die Aufenthaltsbereichs-Aktualisierungs-Nachricht eine Art von Nachricht ist, die das Verbinden der internationalen Mobilfunkteilnehmer-Identifikationsnummer anzeigt, so dass das Endgerät auf das CS-Netzwerk zugreift; und/oder, wenn sich das CS-Verarbeitungsmodul auf dem Endgerät in einem ausgeschalteten Zustand befindet, Einschalten des CS-Verarbeitungsmoduls auf dem Endgerät durch das Endgerät und Senden einer Aufenthaltsbereichs-Aktualisierungs-Nachricht an die Netzwerkseite, wobei die Aufenthaltsbereichs-Aktualisierungs-Nachricht eine übliche Art von Aufenthaltsbereichs-Aktualisierungs-Nachricht ist, so dass das Endgerät auf das Leitungsvermittlungs-, CS-, Netzwerk zugreift.

3. Verfahren nach Anspruch 1, wobei das Endgerät umfasst:
ein Einstellungs-Menü, das eine Option enthält,
wobei die Option dazu ausgeführt ist, eine Auswahloperation zu empfangen und die erste Schaltanweisung zu erzeugen.

4. Endgerät, umfassend:
eine Empfangseinheit (11), die dazu ausgeführt ist, eine erste Schaltanweisung zu empfangen, die von einem Benutzer eingegeben wird, wobei die erste Schaltanweisung zum Umschalten eines Arbeitsmodus eines Endgerätes in einen Zielmodus verwendet wird, wobei der Arbeitsmodus indiziert, dass ein Leitungsvermittlungs-, CS-, Domäne-Dienst sich in einem verbundenen Zustand befindet und ein Paketvermittlungs-, PS-, Domäne-Dienst sich in einem verbundenen Zustand befindet; und
eine Verarbeitungseinheit (12), die dazu ausgeführt ist, den Arbeitsmodus des Endgerätes in den Zielmodus gemäß der ersten Schaltanweisung umzuschalten, wobei der Zielmodus indiziert, dass sich ein Leitungsvermittlungs-, CS-Domäne-Dienst in einem getrennten Zustand befindet und der Paketvermittlungs-, PS-, Domäne-Dienst sich in einem verbundenen Zustand befindet;
wobei die Verarbeitungseinheit (12) umfasst:
ein erstes Sendemodul (21), das dazu ausgeführt ist, eine Nachricht, die das Trennen der internationalen Mobilfunkteilnehmer-Identifikationsnummer anzeigt, an eine Netzwerkseite zu senden, um die Netzwerkseite zu veranlassen, das Endgerät von einem CS-Netzwerk abzukoppeln; und/oder,
ein erstes Verarbeitungsmodul (22), das dazu ausgeführt ist, ein CS-Verarbeitungsmodul auf dem Endgerät auszuschalten, so dass das Endgerät nicht in der Lage ist, auf das CS-Netzwerk zuzugreifen.

5. Endgerät nach Anspruch 4, wobei,
die Empfängereinheit (11) dazu ausgeführt ist, eine zweite Schaltanweisung, die von einem Benutzer eingegeben wird, zu empfangen, wobei die zweite Schaltanweisung zum Einschalten des CS-Domäne-Dienstes verwendet wird;
die Verarbeitungseinheit (12) ferner dazu ausgeführt ist, zu bestimmen, ob das CS-Verarbeitungsmodul auf dem Endgerät sich in einem eingeschalteten Zustand befindet; wenn sich das CS-Verarbeitungsmodul auf dem Endgerät in einem eingeschalteten Zustand befindet, das Endgerät dazu zu befähigen, eine Aufenthaltsbereichs-Aktualisierungs-Nachricht an die Netzwerkseite zu senden, wobei die Aufenthaltsbereichs-Aktualisierungs-Nachricht eine Art von Nachricht ist, die das Verbinden der internationalen Mobilfunkteilnehmer-Identifikationsnummer anzeigt, so dass das Endgerät auf das CS-Netzwerk zugreift; und wenn sich das CS-Verarbeitungsmodul auf dem Endgerät in einem ausgeschalteten Zustand befindet, das Endgerät dazu zu befähigen, das CS-Verarbeitungsmodul auf dem Endgerät einzuschalten und eine Aufenthaltsbereichs-Aktualisierungs-Nachricht an die Netzwerkseite zu senden, wobei die Aufenthaltsbereichs-Aktualisierungs-Nachricht eine übliche Art von Aufenthaltsbereichs-Aktualisierungs-Nachricht ist, so dass das Endgerät auf das Leitungsvermittlungs-, CS-, Netzwerk zugreift.

## Revendications

1. Procédé de commutation de mode, comprenant :
la réception (101), par un terminal, d'une première instruction de commutation entrée par un utilisateur, la première instruction de commutation étant utilisée pour commuter un mode de fonctionnement du terminal vers un mode cible, le mode de fonctionnement indiquant qu'un service de domaine de commutateur de circuit, CS, est dans un état connecté et un service de domaine de commutateur de paquets, PS, est dans un état connecté ; et
la commutation (102), par le terminal, du mode de fonctionnement du terminal vers le mode cible selon la première instruction de commutation, le mode cible indiquant que le service de domaine de CS est dans un état déconnecté, et le service de domaine de PS est dans un état connecté ;
la commutation, par le terminal, du mode de fonctionnement du terminal vers le mode cible selon la première instruction de commutation comprenant :
l'envoi, par le terminal, d'un message d'indication de dissociation de numéro d'identification internationale d'abonné mobile à un côté réseau, de manière à déclencher le côté réseau pour dissocier le terminal d'un réseau de CS ; ou,
l'extinction, par le terminal, d'un module de traitement de CS sur le terminal, afin que le terminal soit incapable d'accéder au réseau de CS.

2. Procédé selon la revendication 1, après la commutation du mode de fonctionnement du terminal vers le mode cible, comprenant en outre :
la réception, par le terminal, d'une deuxième instruction de commutation entrée par l'utilisateur, la deuxième instruction de commutation étant utilisée pour allumer le service de domaine de CS ;
la détermination du fait que le module de traitement de CS sur le terminal est ou non dans un état de marche ;
si le module de traitement de CS sur le terminal est dans un état de marche, l'envoi, par le terminal, d'un message de mise à jour de zone de localisation au côté réseau, le message de mise à jour de zone de localisation étant un type d'information d'indication d'association de numéro d'identification internationale d'abonné mobile, afin que le terminal accède au réseau de CS ; et/ou,
si le module de traitement de CS sur le terminal est dans un état d'arrêt, l'allumage, par le terminal, du module de traitement de CS sur le terminal, et l'envoi d'un message de mise à jour de zone de localisation au côté réseau, le message de mise à jour de zone de localisation étant un type d'un message de mise à jour de zone de localisation commun, afin que le terminal accède au réseau de commutateur de circuit, CS.

3. Procédé selon la revendication 1, le terminal comprenant :
un menu de réglage, lequel contient une option,
l'option est configurée pour recevoir une opération de sélection et générer la première instruction de commutation.

4. Terminal, comprenant :
une unité de réception (11), configurée pour recevoir une première instruction de commutation entrée par un utilisateur, la première instruction de commutation étant utilisée pour commuter un mode de fonctionnement d'un terminal vers un mode cible, le mode de fonctionnement indiquant qu'un service de domaine de commutateur de circuit, CS, est dans un état connecté et un service de domaine de commutateur de paquets, PS, est dans un état connecté ; et
une unité de traitement (12) configurée pour commuter le mode de fonctionnement du terminal vers le mode cible selon la première instruction, le mode cible indiquant qu'un service de domaine de commutateur, CS, est dans un état déconnecté, et un service de domaine de commutateur de paquets, PS, est dans un état connecté ;
l'unité de traitement comprenant :
un premier module d'envoi (21), configuré pour envoyer un message d'indication de dissociation de numéro d'identification internationale d'abonné mobile à un côté réseau, de manière à déclencher le côté réseau pour dissocier le terminal d'un réseau de CS ; et/ou,
une première unité de traitement (22), configurée pour éteindre un module de traitement de CS sur le terminal, afin que le terminal soit incapable d'accéder au réseau de CS.

5. Terminal selon la revendication 4,
l'unité de réception (11) étant configurée pour recevoir une deuxième instruction de commutation entrée par un utilisateur, la deuxième instruction de commutation étant utilisée pour allumer le service de domaine de CS ;
l'unité de traitement (12) étant en outre configurée pour déterminer si le module de traitement de CS sur le terminal est dans un état de marche ; lorsque le module de traitement de CS sur le terminal est dans un état de marche, autoriser le terminal à envoyer un message de mise à jour de zone de localisation vers le côté réseau, le message de mise à jour de zone de localisation étant un type d'information d'indication d'association de numéro d'identification internationale d'abonné mobile, afin que le terminal accède au réseau de CS ; et lorsque le module de traitement de CS sur le terminal est dans un état d'arrêt, autoriser le terminal à allumer le module de traitement de CS sur le terminal et envoyer un message de mise à jour de zone de localisation au côté réseau, le message de mise à jour de zone de localisation étant un type d'un message de mise à jour de zone de localisation commun, afin que le terminal accède au réseau de commutateur de circuit, CS.
